# EUROPEAN PATENT APPLICATION

(11) **EP 3 096 547 A1**
(43) Date of publication of application: **23.11.2016**
(21) Application number: 15305744.3
(22) Date of filing: 19.05.2015
(51) Int. Cl.: H04W 16/28

(54) **APPARATUSES, METHODS AND COMPUTER PROGRAMS FOR A FIRST AND A SECOND BASE STATION TRANSCEIVER, THE FIRST BASE STATION TRANSCEIVER COMPRISING AN ANTENNA BEING FLEXIBLY MOVEABLE AROUND A MOUNTING DEVICE FOR THE ANTENNA**

(71) Applicant: ALCATEL LUCENT, 92100 Boulogne-Billancourt (FR)
(72) Inventor: Hoek, Cornelis, 71732 Tamm (DE); Schaepperle, Joerg, 70435 Stuttgart (DE)
(74) Representative: 2SPL Patentanwälte PartG mbB

(57) **Abstract**

Embodiments relate to apparatuses (10; 20), methods and computer programs for a first (100) and a second (200) base station transceiver, the first base station transceiver (100) comprising an antenna (110) being flexibly movable around a mounting device for the antenna (110). A mobile communication system (300) comprises the first base station transceiver (100) and the second base station transceiver (200). The apparatus (10) comprises a transceiver module (12) to wirelessly communicate with the second base station transceiver (200) via the antenna (110). The apparatus (10) further comprises a control module (14) to determine information related to a position of the antenna (110) and to provide the information related to the position of the antenna (110) via the transceiver module (12) to the second base station transceiver (200).

## Description

### Technical Field

Embodiments relate to apparatuses, methods and computer programs for a first and a second base station transceiver, the first base station transceiver comprising an antenna being flexibly movable around a mounting device for the antenna, more particularly, but not exclusively, to determining information related to a position of the antenna.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

Current mobile communication systems increasingly rely on small cell base stations. Small cell base stations can be used to cover areas where the macro cell base stations do not provide sufficient coverage and capacity and to improve network efficiency. Small cells may appear to be an efficient approach to increase the capacity and improve network efficiency. It is recognized, however, that the potential attractiveness of small cells might only be realized if installation costs can be controlled. A key requirement for a small cell installation might be the backhaul, which when provided by wired connections may often be costly. To enable a more cost-efficient and flexible deployment, the wired backhaul connection may be eliminated by using a wireless backhaul, e.g. using a directed beam.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs for a first and a second base station transceiver, the first base station transceiver comprising an antenna being flexibly movable around a mounting device for the antenna. In embodiments, base station transceivers, such as small cell base station transceivers, may use antennas that may in general be in a fixed position, but which may be susceptible to weather influences. Especially strong winds may influence the position of the antenna slightly, and may cause the antenna to start oscillating around the fixed position. If the base station transceiver is connected to another base station transceiver, e.g. a macro cell base station or a baseband processing unit (e.g. a NodeB) of a remote-radio-head-based base station transceiver via a wireless backhaul, e.g. via a directed beam, such oscillations may degrade the signal between the two base station transceivers. Embodiments may determine a position and/or an oscillation of the antenna at the small cell base station transceiver, and may provide the information to the macro cell base station transceiver or the baseband processing unit, which may use the information to adjust the signal to the position of the small cell's antenna. To limit the amount of overhead, the small cell might transmit only some positions, e.g. extreme points, and other positions may be inter- or extrapolated.

Embodiments provide an apparatus suitable for a first base station transceiver in a mobile communication system. The mobile communication system further comprises a second base station transceiver. The first base station transceiver further comprises an antenna being flexibly moveable around a mounting device for the antenna. The apparatus comprises a transceiver module to wirelessly communicate with the second base station transceiver via the antenna. The apparatus further comprises a control module to determine information related to a position of the antenna and to provide the information related to the position of the antenna via the transceiver module to the second base station transceiver. Providing the information related to the position to the second base station transceiver may enable the second base station transceiver to adjust a signal for the wireless communication to account for the changes in the position of the antenna, e.g. when using beam forming and zero forcing, and may enable or improve communication between the first and second base station transceiver when the position of the antenna of the first base station transceiver is changing, e.g. due to an influence of weather.

In various embodiments, the apparatus may further comprise an input. The control module may be further configured to obtain raw information related to the position of the antenna via the input. The control module may be further configured to determine the information related to the position based on the raw information related to the position. Using the raw information related to the position may enable the control module to determine the information related to the position. Obtaining the raw information related to the position via the input, e.g. from an external source, may reduce a complexity of the apparatus, and may enable a measurement of the raw information related to the position at the source of the movement.

In various embodiments, the input may be configured to obtain the raw information related to the position from a movement detection module. In at least some embodiments, the apparatus may further comprise the movement detection module being coupled to the input. Obtaining the raw information related to the position from a movement detection module, which might e.g. be based on a gyroscope, may enable a determination of the information related to the position using available technology, and may provide a higher resolution than a localization module, e.g. based on the Global Positioning System (GPS). Comprising the movement detection module in the apparatus, e.g. if the apparatus is in a fixed position from the antenna, may decrease costs of an implementation.

In at least some embodiments, the first base station transceiver may correspond to a small cell base station transceiver and/or a remote radio head. The second base station transceiver may correspond to a macro cell base station transceiver. Small cell base station transceivers, which may have a smaller size than macro cell base station transceivers, may comprise less sturdy antennas, so the position of the antenna may change more than the position of an antenna of a macro cell base station transceiver, so providing the position of the antenna of the small cell base station transceiver may be advantageous. Macro cell base station transceivers may have processing capacity required to transform the information related to the position into information required to adjust the transceiver or transmission.

In various embodiments, the information related to the position may comprise at least one element of the group of information related to an absolute position of the antenna, information related to a relative position of the antenna, information related to a direction of the antenna, information related to a velocity of the antenna, information related to an acceleration of the antenna, information related to an oscillation of the antenna, information related to one or more oscillation periods of the antenna, information related to one or more oscillation amplitudes of the antenna, information related to statistical properties of a movement of the antenna, and information related to a zero-crossing of the antenna. Using position information and/or information related to a trajectory, velocity and/or acceleration of the antenna may enable the determination of the information related to the position of the antenna.

In at least some embodiments, the control module may be further configured to determine channel state information on a radio channel between the second base station transceiver and the antenna via the transceiver module. The control module may be further configured to provide the channel state information via the transceiver module to the second base station transceiver. Providing the channel state information to the second base station transceiver may enable the second base station transceiver to determine a coherence between a position of the antenna and a channel state, which may enable the second base station transceiver to adjust the transceiver or transmission.

In various embodiments, the apparatus may further comprise a storage module. The storage module may be used to store the channel state information and the information related to the position, which may enable the control module to control the transceiver module based on a statistical analysis of the channel state information and the information related to the position.

In various embodiments, the control module may be configured to provide the information related to the position on a first more frequent time-basis. The control module may be configured to provide the channel state information on a second less frequent time basis. As the channel state information may be similar over time for a position, and the second base station transceiver may aggregate a plurality of previous tuples of position and channel state information, the second base station transceiver may inter- or extrapolate the channel state for positions transmitted without the channel state information. Sending the channel state information less frequently may decrease an overhead caused by the transmission.

In at least some embodiments, the control module may be configured to determine information related to one or more favorable positions, based on the channel state information and the information related to the position. The control module may be configured to provide the channel state information and/or the information related to the position based on the information related to the one or more favorable positions. The control module may determine the information related to the one or more favorable positions such, that position - channel state information tuples are transmitted which may allow an inter- or extrapolation of the channel state at other positions, which may result in fewer transmissions of the channel state information and may decrease an overhead caused by the transmission.

In various embodiments, the control module may be configured to control the transceiver module based on the information related to the position. Using the information related to the position to the second base station transceiver may enable the control module to adjust a signal for the wireless communication to account for the changes in the position of the antenna, e.g. when using beam forming and zero forcing, and may enable or improve communication between the first and second base station transceiver when the position of the antenna of the first base station transceiver is changing, e.g. due to an influence of weather.

In at least some embodiments, the control module may be further configured to determine at least one element of the group of information related to a coherence time and information related to a coherence distance based on a statistical analysis of the channel state information and the information related to the position. The control module may be further configured to provide the information related to the position and/or the channel state information based on the information related to the coherence time and/or based on the information related to the coherence distance. Providing the information related to the position and/or the channel state information based on the information related to the coherence time or coherence distance may improve a prediction of the channel state at the second base station transceiver and may decrease an overhead required for the transmission.

Embodiments further provide an apparatus suitable for a second base station transceiver in a mobile communication system further comprising a first base station transceiver. The apparatus comprises a transceiver module to wirelessly communicate with the first base station transceiver. The apparatus further comprises a control module to obtain information related to a position of an antenna of the first base station transceiver via the transceiver module. The control module is further configured to control the communication of the transceiver module with the antenna of the first base station transceiver based on the information related to the position. Using the information related to the position to the second base station transceiver may enable the control module to adjust a signal for the wireless communication to account for the changes in the position of the antenna, e.g. when using beam forming and zero forcing, and may enable or improve communication between the first and second base station transceiver when the position of the antenna of the first base station transceiver is changing, e.g. due to an influence of weather.

In various embodiments, the first base station transceiver may correspond to a small cell base station transceiver and/or a remote radio head. The second base station transceiver may correspond to a macro cell base station transceiver. Small cell base station transceivers, which may have a smaller size than macro cell base station transceivers, may comprise less sturdy antennas, so the position of the antenna may change more than the position of an antenna of a macro cell base station transceiver, so providing the position of the antenna of the small cell base station transceiver may be advantageous. Macro cell base station transceivers may have processing capacity required to transform the information related to the position into information required to adjust the transceiver or transmission.

In various embodiments, the transceiver module may be further configured to obtain channel state information from the first base station transceiver. The control module may be further configured to control the transceiver module based on the channel state information. Using the channel state information to the second base station transceiver may enable the control module to determine a coherence between a position of the antenna and a channel state, which may enable the control module to control and/or adjust the transceiver module or transmission.

In at least some embodiments, the information related to the position may comprise at least one element of the group of information related to an absolute position of the antenna, information related to a relative position of the antenna, information related to a direction of the antenna, information related to a velocity of the antenna, information related to an acceleration of the antenna, information related to an oscillation of the antenna, information related to one or more oscillation periods of the antenna, information related to one or more oscillation amplitudes of the antenna, information related to statistical properties of a movement of the antenna, and information related to a zero-crossing of the antenna. Using position information and/or information related to a trajectory, velocity and/or acceleration of the antenna may enable a more precise controlling of the transceiver module and may enable or enhance a prediction of the channel state.

In various embodiments, the control module may be configured to obtain the information related to the position on a first more frequent time-basis. The control module may be configured to obtain the channel state information on a second less frequent time basis. As the channel state information may be similar for a position, and the second base station transceiver may aggregate a plurality of previous tuples of position and channel state information, the control module may inter- or extrapolate the channel state for positions transmitted without the channel state information. Obtaining the channel state information less frequently may decrease an overhead caused by the transmission.

In at least some embodiments, the control module may be configured to predict the channel state information based on the information related to the position. The control module may be configured to determine information related to a predicted position of the antenna based on the information related to the position. The control module may be configured to predict the channel state information based on the information related to the predicted position. A prediction of the position of the antenna may allow the control module to obtain the information related to the position less frequently and may decrease an overhead caused by a transmission of the information related to the position.

In various embodiments, the control module may be further configured to obtain at least one element of the group of information related to a coherence time and information related to a coherence distance via the transceiver module as part of the information related to the position. The control module may be further configured to control the communication of the transceiver module based on the information related to the coherence time and/or the information related to the coherence distance. The control module may use the information related to the coherence time and/or the information related to the coherence distance to determine a time interval, for which an adjustment of the transceiver module may be performed.

In at least some embodiments, the apparatus may further comprise a storage module. The control module may be configured to store the information related to the position and the channel state information using the storage module. The control module may be configured to determine an estimated channel state based on the stored information related to the position and channel state information. The control module may be configured to control the transceiver module based on the estimated channel state. Using the storage module to store the information related to the position and the channel state information may enable the control module to perform a statistical analysis of a correlation of the information related to the position and the channel state information and may use the result of the statistical analysis to control the transceiver module, e.g. based on the estimated channel state.

Embodiments further provide a method suitable for a first base station transceiver in a mobile communication system. The mobile communication system further comprises a second base station transceiver. The first base station transceiver further comprises an antenna being flexibly moveable around a mounting device for the antenna. The method comprises wirelessly communicating with the second base station transceiver via the antenna. The method further comprises determining information related to a position of the antenna and providing the information related to the position of the antenna to the second base station transceiver.

Embodiments further provide a method suitable for a second base station transceiver in a mobile communication system further comprising a first base station transceiver. The method comprises wirelessly communicating with the first base station transceiver. The method further comprises obtaining information related to a position of an antenna of the first base station transceiver. The method further comprises controlling the wirelessly communicating with the antenna of the first base station transceiver based on the information related to the position.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for a first base station transceiver in a mobile communication system;
- Fig. 2: illustrates a block diagram of an embodiment of an apparatus suitable for a first base station transceiver in a mobile communication system, the apparatus further comprising an input;
- Fig. 2a: illustrates a block diagram of an embodiment of an apparatus suitable for a first base station transceiver in a mobile communication system, the apparatus further comprising an input, an optional movement detection module and an optional storage module;
- Fig. 3: illustrates a block diagram of an embodiment of an apparatus suitable for a second base station transceiver in a mobile communication system further comprising a first base station transceiver;
- Fig. 4: illustrates a diagram of measurements stored in a channel history file;
- Fig. 5: illustrates a flow chart of an embodiment of a method suitable for a first base station transceiver in a mobile communication system; and
- Fig. 6: illustrates a flow chart of an embodiment of a method suitable for a second base station transceiver in a mobile communication system further comprising a first base station transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

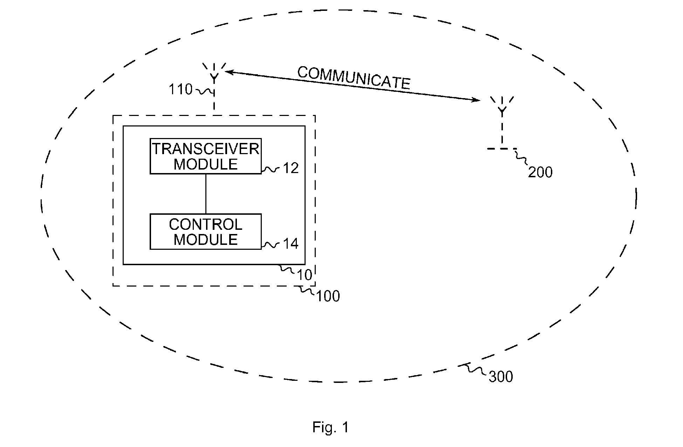

For wireless small cells with wireless backhaul the backhaul channel, between a small cell base station transceiver (or first base station transceiver as defined below, see Fig. 1) and a backhaul base station transceiver (or second base station transceiver as defined below, see Fig. 1) that serves one or more small cells, is often considered to be constant.

If the small cell base station transceiver is mounted on an antenna mast or lighting pole then this assumption might not be valid. In weather conditions with medium or strong winds the antenna mast or lighting pole might start oscillating with several swinging modes. As a result the backhaul radio channel between the small cell base station transceiver and the backhaul base station transceiver may vary over time.

The backhaul base station transceiver may require precise knowledge of the channel variations in order to enable low interference on the backhaul link, especially if beam forming algorithms like zero forcing are used that may require very good channel state information. The variations due to pole oscillations may typically be faster than the variations due to other impacts and increase feedback overhead for reporting downlink channel state information.

In conventional systems, one option may be to use frequent channel estimations. This may allocate many resources of the backhaul link for pilot information and channel feedback and reduce useable uplink data rates.

In embodiments, the small cell base station transceiver (or first base station transceiver as defined below, see Fig. 1) may detect motion information (e.g. position, velocity, and/or acceleration of the antenna) and may report this position (motion) information (e.g. as information related to a position of the antenna) to the backhaul base station transceiver (or second base station transceiver as defined below, see Fig. 1), e.g. frequently every 100 msec.

Additionally, at a much lower rate e.g. every 10 sec, in embodiments, the first base station transceiver may transmit backhaul channel state information to the second base station transceiver as part of the information related to the position.

The backhaul base station transceiver may store a history of the backhaul channel state information and corresponding positions. At frequent time intervals e.g. every 10 msec. the backhaul base station transceiver may use the latest position information report to estimate the present position by extrapolation of the position (motion) information and search for the nearest positions for which the channel state information has been reported recently. The second base station transceiver may interpolate the channel state information corresponding to these positions for finding an estimate of the channel at the present position.

Compared to conventional location reports, the information related to the position may have a higher resolution, typically in the order of magnitude of mm or cm, and might e.g. be given with respect to the average position of the antenna, which might be calculated by averaging of position, velocity and/or acceleration.

Additionally, in various embodiments, the small cell base station transceiver (or first base station transceiver) might store and process downlink channel state information together with position data and derive further quantities like, e.g., a coherence time of the channel at a fixed position, or the coherence length of the channel excluding variations due to antenna movement. These quantities might be reported to the second base station transceiver. The second base station transceiver and/or the first base station transceiver might make decisions, e.g., on the deletion of outdated channel state information from the history. If the spatial resolution of the channel state information reported to the second base station transceiver is not sufficient, the second base station transceiver may decide to request more frequent channel estimates from the small cell base station transceiver, and/or the first base station transceiver may provide the channel estimates more frequently. In embodiments, it may be advantageous to calculate the coherence time and/or coherence distance in the small cell because it may have more precise channel state information.

Fig. 1 illustrates a block diagram of an embodiment of an apparatus 10 suitable for a first base station transceiver 100 in a mobile communication system 300. The mobile communication system 300 further comprises a second base station transceiver 200. The first base station transceiver 100 further comprises an antenna 110 being flexibly moveable around a mounting device for the antenna 110. In at least some embodiments, the antenna 110 may be mounted on or comprised in a lightning pole and/or an antenna mast. In various embodiments, the antenna 110 and or the mounting device may be susceptible to external influences, e.g. the antenna 110 may be moved by wind, and may oscillate based on one or more swinging modes. In at least some embodiments, the first base station transceiver may use beam forming to communicate with the second base station transceiver 200 via the antenna 110. The antenna 110 may correspond to a rod antenna, a dipole antenna, a beamforming antenna, a directional antenna, a beamforming antenna structure, or an antenna array. In at least some embodiments, the mounting device may correspond to a lightning pole, an antenna mast, or another mounting device susceptible to external influences, e.g. wind. As indicated by the dashed lines, the first base station transceiver 100 may comprise the apparatus 10.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, e.g. the first base station transceiver 100 and/or the second base station transceiver 200, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit. In various embodiments, the first base station transceiver 100 may correspond to a remote unit and the second base station transceiver 200 may correspond to a central unit or baseband processing unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In at least some embodiments, the first base station transceiver 100 may correspond to a small cell base station transceiver and/or a remote radio head. The second base station transceiver 200 may correspond to a macro cell base station transceiver. In at least some embodiments, the second base station transceiver 200 may comprise a base band processing unit and the first base station transceiver 100 may correspond to a remote radio head to extend a coverage of the first base station transceiver 100, based on the baseband processing performed by the second base station transceiver 200.

The apparatus 10 comprises a transceiver module 12 to wirelessly communicate with the second base station transceiver 200 via the antenna 110. In at least some embodiments, the transceiver module 12 may be configured to wirelessly communicate with the second base station transceiver 200 using a wireless backhaul link, e.g. based on a beam-formed signal.

The transceiver module 12 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus 10 further comprises a control module 14 configured to determine information related to a position of the antenna 110 and to provide the information related to the position of the antenna 110 via the transceiver module 12 to the second base station transceiver 200. The control module 14 is coupled to the transceiver module 12.

In various embodiments, the information related to the position may comprise at least one element of the group of information related to an absolute position of the antenna 110, information related to a relative position of the antenna 110, information related to a direction of the antenna 110, information related to a velocity of the antenna 110, information related to an acceleration of the antenna 110, information related to an oscillation of the antenna 110, information related to one or more oscillation periods of the antenna 110, information related to one or more oscillation amplitudes of the antenna 110, information related to statistical properties of a movement of the antenna 110, and information related to a zero-crossing of the antenna 110. The information related to the relative position of the antenna 110 may comprise information related to a position of the antenna relative to the mounting device, relative to a center position of the mounting device, relative to a resting position of the antenna 110, or relative to the second base station transceiver 200. In at least some embodiments, the control module 14 may be configured to determine the information related to the position based on motion sensor, based on a movement detection module and/or based on a location sensor. In at least some embodiments, the information related to the position may comprise information related to one or more oscillation periods for the antenna 110 and/or information related to one or more oscillation amplitudes for the antenna 110.

In at least some embodiments, the control module 14 may be configured to control the transceiver module 12 based on the information related to the position. The control module 14 may be configured to adjust a beamforming signal based on the information related to the position. In various embodiments, the control module 14 may adjust parameters, e.g. parameters for null-steering, of a beam-formed signal based on the information related to the position. In at least some embodiments, the control module 14 may adjust a precoding based on the information related to the position.

In embodiments, the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc.

In at least some embodiments, the control module 14 may be further configured to determine channel state information on a radio channel between the antenna 110 and the second base station transceiver 200 via the transceiver module 12. The control module 14 may be further configured to provide the channel state information via the transceiver module 12 to the second base station transceiver 200. In at least some embodiments, the control module 14 may be configured to determine the channel state information by measuring and/or determining properties of the channel, e.g. based on pilot symbols transmitted by the second base station transceiver 200.

In at least some embodiments, the control module 14 may be configured to store the channel state information and the information related to the positon and control the transceiver module 12 based on the processed channel sate information and information related to the position, e.g. by adjusting beam forming parameters of the transceiver module 12 and/or by adjusting a precoding. In at least some embodiments, the control module 14 may be further configured to adjust parameters of a reception filter and/or a reception coding for the transceiver module 12 based on the information related to the position and/or a channel state of the wireless backhaul channel as introduced subsequently.

In at least some embodiments, the channel state information may comprise information related to at least one element of a receive signal power, a Receive Signal Strength Indicator (RSSI), an RSSI region or interval, a Signal-to-Noise-Ratio (SNR), a Signal-to-Interference Ratio (SIR), a Signal-to-Interference-and-Noise Ratio (SINR), a supported constellation size of the signal modulation, a supported rate of the forward error correction, a supported data rate, amplitude and/or phase of complex-valued channel coefficients, or a network or transmission mode.

In various embodiments, the control module 14 may be configured to provide the information related to the position on a first more frequent time-basis. The control module 14 may be configured to provide the channel state information on a second less frequent time basis. The first more frequent time-basis may be based on a duration of an oscillating movement of the antenna 110. In at least some embodiments, the first more frequent time-basis may correspond to 10ms, 25ms, 50ms, 75ms, 80ms, 90ms, 100ms, 125ms, 150ms, 200ms, 250ms, 500ms for example. The second less frequent time basis may correspond to 1s, 2s, 3s, 5s, 7.5s, 10s, 12.5s, 16s, 20s, 30s for example.

In at least some embodiments, the control module may be configured to determine information related to one or more favorable positions, based on the channel state information and the information related to the position. The control module 14 may be configured to provide the channel state information and/or the information related to the position based on the information related to the one or more favorable positions. In various embodiments, favorable positions may correspond to positions of the antenna which provide advantageous properties for a later inter- or extrapolation of the channel state information and/or information related to the position. In at least some embodiments, the one or more favorable positions may correspond to extreme positions of an oscillation of the antenna 110 and/or equidistant/equitemporal points between extremes of an oscillation of the antenna 110. In at least some embodiments, the control module 14 may be configured to preprocess the channel state information and the information related to the position and may report the channel state information for positions that are well suited for later interpolation. (e.g. equidistant positions including the position extremes of the pole oscillation).

In various embodiments, the control module 14 may be further configured to determine at least one element of the group of information related to a coherence time and information related to a coherence distance based on a statistical analysis of the channel state information and the information related to the position. The control module 14 may be further configured to provide the information related to the position and/or the channel state information based on the information related to the coherence time and/or based on the information related to the coherence distance. The control module 14 may be further configured to provide the information related to the coherence time and/or the information related to the coherence distance to the second base station transceiver 200. In at least some embodiments, the control module 14 may use the information related to the coherence time and/or the information related to the coherence distance and/or the information related to the position to determine the first more frequent time basis and/or the second less frequent time basis, e.g. based on an analysis of a distance and/or time, for which an interpolation and/or extrapolation of channel state information may be feasible. In various embodiments, the control module 14 may be configured to provide the information related to the coherence time of the channel for a fixed position of the antenna 110.

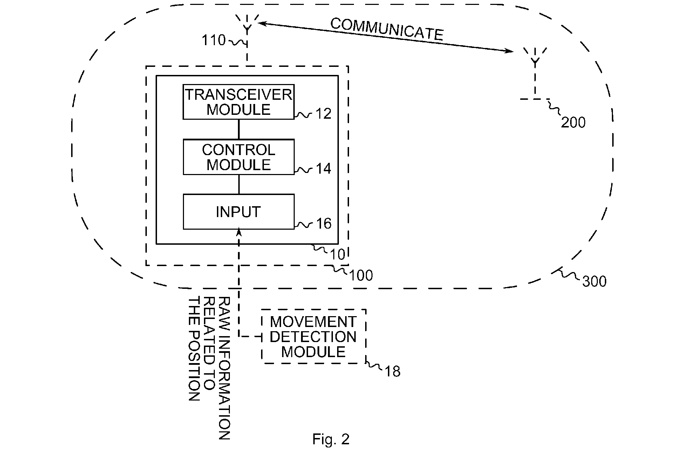

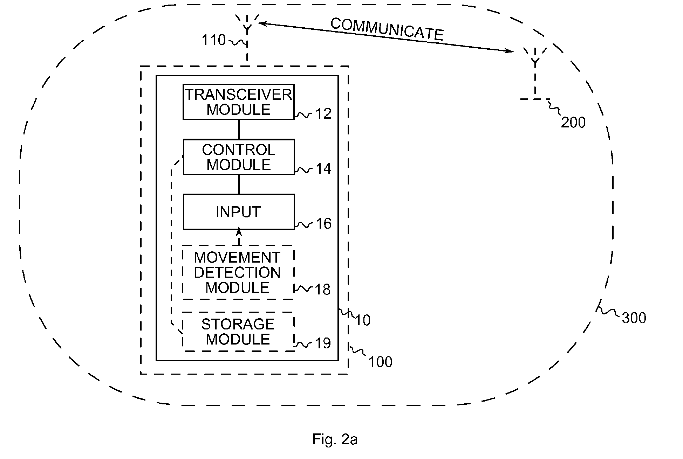

Fig. 2 illustrates a block diagram of an embodiment of the apparatus 10 further comprising an input 16. The control module 14 may be further configured to obtain raw information related to the position of the antenna 110 via the input 16. The control module 14 may be configured to determine the information related to the position based on the raw information related to the position. In at least some embodiments, the raw information related to the position may comprise information related to an angle of the antenna 110, information related to a vibration of the antenna 110, information related to a velocity of the antenna 110, information related to an acceleration of the antenna 110, information related to an angle between the antenna 110 and the mounting device, and/or information related to an angle between the antenna 110 and an arbitrary reference. In various embodiments, the control module 14 may be configured to convert the raw information related to the position to determine the information related to the position. In various embodiments, the control module 14 may be configured to determine the information related to the position based on reference raw information and/or based on interpolating the information related to the position between known positions based on the raw information related to the position.

In at least some embodiments, the input 16 may be configured to obtain the raw information related to the position from a movement detection module 18. In various embodiments, the apparatus 10 may further comprise the movement detection module 18 being coupled to the input 16. In at least some embodiments, the movement detection module 18 may comprise at least one element of the group of a gyroscope, an accelerometer, an optical sensor, a localization module, a vibration sensor, and an inclinometer.

In Fig. 2, the apparatus 10 further comprises the transceiver module 12 and the control module 14. The control module is coupled to the input 16 and to the transceiver module 12. The apparatus 10 is comprised in the first base station transceiver 100. The mobile communication system 300 comprises the first base station transceiver 100 and the second base station transceiver 200.

Fig. 2a illustrates a block diagram of an embodiment of the apparatus 10 further comprising the input 16. The apparatus 10 may optionally comprise the movement detection module 18 as indicated by the dashed lines, and may further comprise and an optional storage module 19, as further indicated by the dashed lines. The optional movement detection module 18 is optionally coupled to the input 16, as indicated by the dashed lines. The optional storage module 19 is optionally coupled to the control module 14, as indicated by the dashed lines.

In at least some embodiments, the storage module 19 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

In Fig. 2a, the apparatus 10 further comprises the transceiver module 12 and the control module 14. The control module 14 is coupled to the input 16 and to the transceiver module 12. The apparatus 10 is comprised in the first base station transceiver 100. The mobile communication system 300 comprises the first base station transceiver 100 and the second base station transceiver 200.

The control module 14 may be configured to store the information related to the position and the channel state information using the storage module 19. The control module 14 may be configured to determine an estimated channel state based on the stored information related to the position and channel state information. The control module 14 may be configured to control the transceiver module 12 based on the estimated channel state.

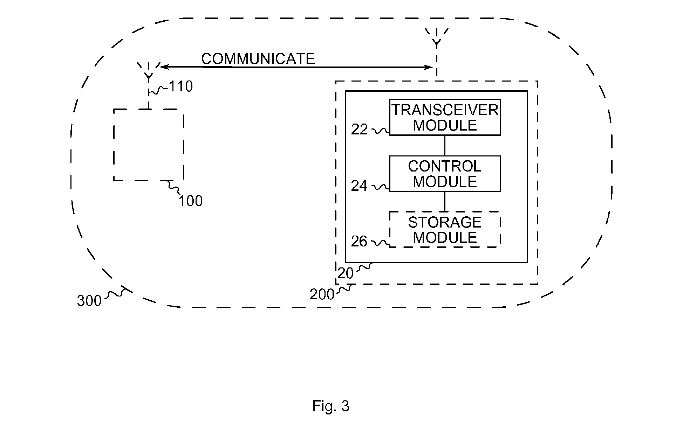

Fig. 3 illustrates a block diagram of an embodiment of an apparatus 20 suitable for a second base station transceiver 200 in a mobile communication system 300 further comprising a first base station transceiver 100. As indicated by dashed lines, in at least some embodiments, the second base station transceiver 200 may comprise the apparatus 20.

The apparatus 20 comprises a transceiver module 22 to wirelessly communicate with the first base station transceiver 100. The transceiver module 22 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In at least some embodiments, the transceiver module 22 may be configured to wirelessly communicate with the first base station transceiver 100 using a wireless backhaul link or a wireless fronthaul link, e.g. between the second base station transceiver 200, which may correspond to a NodeB, and the first base station transceiver 100, which may correspond to a Remote Radio Head (RRH).

The apparatus 20 further comprises a control module 24 configured to obtain information related to a position of an antenna 110 of the first base station transceiver 100 via the transceiver module 22. The control module 24 is further configured to control the communication of the transceiver module 22 with the antenna 110 of the first base station transceiver 100 based on the information related to the position. In at least some embodiments, the control module 24 may be configured to adjust beam forming parameters based on the information related to the position and/or to adjust a precoding based on the information related to the position, e.g. to adjust to changes in distance between the second base station transceiver 200 and the antenna 110. In various embodiments, the control module 24 may request the information related to the position to be provided by the first base station transceiver in specified time intervals.

In embodiments the control module 24 may be implemented using one or more processing units, one or more processing devices, any means for processing, such as a processor, a computer or a programmable hardware component being operable with accordingly adapted software. In other words, the described function of the control module 24 may as well be implemented in software, which is then executed on one or more programmable hardware components. Such hardware components may comprise a general purpose processor, a Digital Signal Processor (DSP), a micro-controller, etc. The control module 24 is coupled to the transceiver module 22.

In various embodiments, the transceiver module 22 may be further configured to obtain channel state information from the first base station transceiver 100. The control module 24 may be further configured to control the transceiver module 22 based on the channel state information. The control module 24 may be configured to adjust a precoding and/or parameters of a directed beam based on the channel state information. The control module 24 may be configured to determine which parameters may increase a performance of the wireless channel for a position of the antenna based on the channel state information, and may interpolate or extrapolate appropriate parameters based on the information related to the position. In at least some embodiments, the control module 24 may be further configured to adjust parameters of a reception filter and/or a reception coding for the transceiver module 22 based on the channel state information and/or the information related to the position.

In at least some embodiments, the control module 24 may be configured to predict the channel state information based on the information related to the position. The control module 24 may be configured to determine information related to a predicted position of the antenna based on the information related to the position. The control module 24 may be configured to predict the channel state information based on the information related to the predicted position. In at least some embodiments, the control module 24 may predict the position based on a current position of the antenna 110 comprised in the information related to the position, and information related to a velocity of the antenna 110, information related to an acceleration of the antenna 110, information related to extremes of an oscillation of the antenna 110, information related to one or more oscillation periods for the antenna 110 and/or information related to one or more oscillation amplitudes for the antenna 110. In at least some embodiments, the control module 24 may be configured to predict the channel state information based on the information related to the predicted position and channel state information for positions in proximity of the predicted position. The control module 24 may be configured to interpolate and/or extrapolate the channel state information to predict the channel state information based on the information related to the predicted position and the channel state information for positions in the proximity of the predicted position.

As further shown in Fig. 3, the apparatus 20 may further comprise an optional storage module 26 coupled to the control module 24, as indicated by the dashed lines. The control module 24 may be configured to store the information related to the position and the channel state information using the storage module 26. The control module 24 may be configured to determine an estimated channel state based on the stored information related to the position and channel state information. The control module 24 may be configured to control the transceiver module 22 based on the estimated channel state.

In at least some embodiments, the storage module 26 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

In at least some embodiments, the control module 24 may be configured to obtain the information related to the position on a first more frequent time-basis. The control module 24 may be configured to obtain the channel state information on a second less frequent time basis.

In various embodiments, the control module 24 may be further configured to obtain at least one element of the group of information related to a coherence time and information related to a coherence distance via the transceiver module 22 as part of the information related to the position. The control module 24 may be further configured to control the communication of the transceiver module 22 based on the information related to the coherence time and/or the information related to the coherence distance. In at least some embodiments, the control module 24 may be configured to determine a frequency and/or a recurrence of adjustments of the transceiver module 22 based on the information related to the coherence time and/or the information related to the coherence distance. In various embodiments, the control module 24 may be configured to request additional channel state information from the first base station transceiver 100, based on the information related to the coherence time and/or the information related to the coherence distance, e.g. if additional channel state information may improve the prediction of the channel state information for the predicted position of the antenna 110.

More details and aspects of the apparatus 20 (e.g. mobile communication system 300, first base station transceiver 100, second base station transceiver 200, antenna 110, wireless backhaul link, information related to a position of an antenna 110, channel state information, first more frequent time basis, second less frequent time basis) are mentioned in connection with the proposed concept or one or more examples described above (e.g. Fig. 1 and 2). The apparatus 20 may comprise one or more additional optional features corresponding to one or more aspects of the proposed concept or one or more examples described above or below.

In at least some embodiments, the first base station transceiver 100 and the second base station transceiver 200 may be configured to provide the information related to the position of their antenna and/or the channel state information to their respective counterpart. For example, the first base station transceiver 100 and second base station transceiver 200 may comprise both the apparatus 10 and the apparatus 20. The control module 24 comprised in the first mobile communication system may be configured to control the transceiver module 22 based on information related to a position of an antenna of the second base station transceiver 200, information related to a position of an antenna of the first base station transceiver 100 and information related to the channel state, for example. The control module 24 may be configured to determine an aggregate position variation between the antennas of the first 100 and second 200 base station transceivers, and control the transceiver module 22 based on information related to the aggregate position information. The control module 24 may predict the aggregate position variation and the predicted channel state for the predicted aggregate position analogous to the above-mentioned embodiments. In at least some embodiments, the control module 14 may determine the channel state information based on a function based on the position of the antenna 110 of the first base station transceiver 100 and the position of an antenna of the second base station transceiver 200, e.g. based on a relative distance between the antennas, a relative angle between the antennas, and/or based on absolute positions of the antennas.

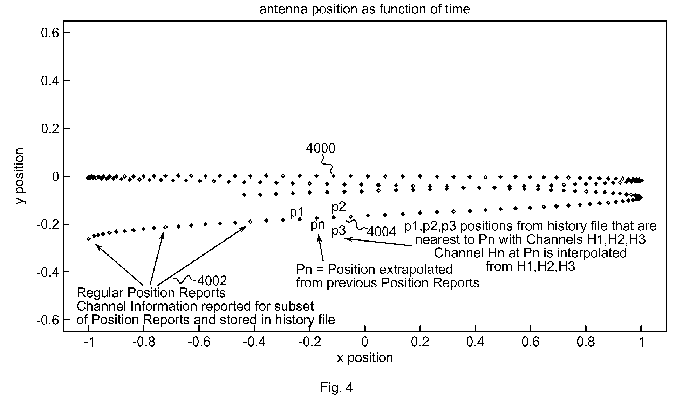

Fig. 4 illustrates a diagram of measurements 4000 stored in a channel history file, which may correspond to an exemplary embodiment of the storage module 26. In exemplary embodiments, the small cell, e.g. the control module 14 of the apparatus 10 of the first base station transceiver 100, may be configured to detect motion information (e.g. position, velocity and/or acceleration), e.g. as information related to the position. The control module 14 may report the information related to the position in regular time intervals 4002 to the backhaul base station transceiver, which may correspond to the second base station transceiver 200, e.g. every 100ms. The control module 14 may be further configured to determine channel state information, which the control module 14 may provide comprised in the information related to the position in a subset of position reports (e.g. every 10 sec), or separately.

The control module 24 may store the channel state information and corresponding position in a Channel History File, e.g. using the storage module 26. At regular time intervals (e.g. every 10 msec.), the control module 24 may compute the present position 4004 of the antenna 110 using the latest position (motion) report. The control module 24 may search in the Channel History File for the nearest positions with Channel State Information, and may interpolate or extrapolate the estimated channel state based on Channel State Information corresponding to positions closest to the predicted position of the antenna.

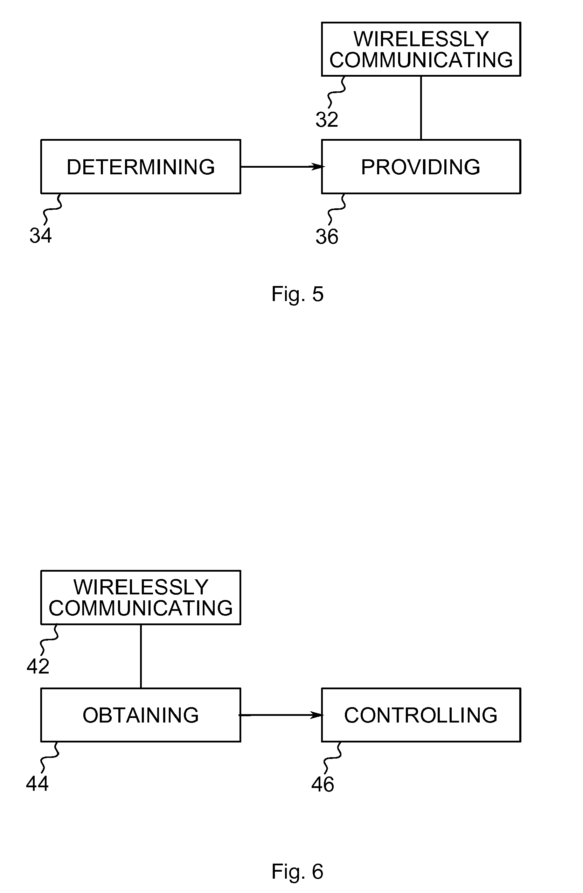

Fig. 5 illustrates a flow chart of an embodiment of a method suitable for a first base station transceiver 100 in a mobile communication system 300. The mobile communication system 300 further comprises a second base station transceiver 200. The first base station transceiver 100 further comprises an antenna 110 being flexibly moveable around a mounting device for the antenna 110. The method comprises wirelessly communicating 32 with the second base station transceiver 200 via the antenna 110. The method further comprises determining 34 information related to a position of the antenna 110. The method further comprises providing 36 the information related to the position of the antenna 110 to the second base station transceiver 200.

Fig. 6 illustrates a flow chart of an embodiment of a method suitable for a second base station transceiver 200 in a mobile communication system 300 further comprising a first base station transceiver 100. The method comprises wirelessly communicating 42 with the first base station transceiver 100. The method further comprises obtaining 44 information related to a position of an antenna 110 of the first base station transceiver 100. The method further comprises controlling 46 the wirelessly communicating 42 with the antenna 110 of the first base station transceiver 100 based on the information related to the position.

A further embodiment is a computer program product comprising a computer readable medium having computer readable program code embodied therein, the computer readable program code being configured to implement one of the above methods when being loaded on a computer, a processor, or a programmable hardware component.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may enable the second base station transceiver to calculate the actual channel state information without needing frequent reporting of the channel state information by the small cell. Embodiments may further enable the second base station transceiver to estimate the Channel State Information with a higher accuracy than without position feedback. Embodiments may further reduce capacity of the backhaul link is used for position (motion) reports from the small cell. Conventional approaches may use a large amount of backhaul capacity for frequent Channel State Information reports. More precise channel state information may improve an accuracy of precoding and increase data rates.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a first base station transceiver (100) in a mobile communication system (300), the mobile communication system (300) further comprising a second base station transceiver (200), the first base station transceiver (100) further comprising an antenna (110) being flexibly moveable around a mounting device for the antenna (110), the apparatus (10) comprising
a transceiver module (12) to wirelessly communicate with the second base station transceiver (200) via the antenna (110);
a control module (14) configured to determine information related to a position of the antenna (110) and to provide the information related to the position of the antenna (110) via the transceiver module (12) to the second base station transceiver (200).

2. The apparatus (10) of claim 1 further comprising an input (16), wherein the control module (14) is further configured to obtain raw information related to the position of the antenna (110) via the input (16), and to determine the information related to the position based on the raw information related to the position.

3. The apparatus (10) of claim 1,
wherein the first base station transceiver (100) corresponds to a small cell base station transceiver and/or a remote radio head
and/or wherein the second base station transceiver (200) corresponds to a macro cell base station transceiver
and/or wherein the information related to the position comprises at least one element of the group of information related to an absolute position of the antenna (110), information related to a relative position of the antenna (110), information related to a direction of the antenna (110), information related to a velocity of the antenna (110), information related to an acceleration of the antenna (110), information related to an oscillation of the antenna (110), information related to one or more oscillation periods of the antenna (110), information related to one or more oscillation amplitudes of the antenna (110), information related to statistical properties of a movement of the antenna (110), and information related to a zero-crossing of the antenna (110),
and/or wherein the control module (14) is configured to control the transceiver module (12) based on the information related to the position.

4. The apparatus (10) of claim 1, wherein the control module (14) is further configured to determine channel state information on a radio channel between the second base station transceiver (200) and the antenna (110) via the transceiver module (12), and wherein the control module (14) is further configured to provide the channel state information via the transceiver module (12) to the second base station transceiver (200).

5. The apparatus (10) of claim 4,
wherein the control module is configured to determine information related to one or more favorable positions, based on the channel state information and the information related to the position, and wherein the control module (14) is configured to provide the channel state information and/or the information related to the position based on the information related to the one or more favorable positions,
and/or wherein the control module (14) is configured to provide the information related to the position on a first more frequent time-basis, and wherein the control module (14) is configured to provide the channel state information on a second less frequent time basis,
and/or wherein the control module (14) is further configured to determine at least one element of the group of information related to a coherence time and information related to a coherence distance based on a statistical analysis of the channel state information and the information related to the position, and wherein the control module (14) is further configured to provide the information related to the position and/or the channel state information based on the information related to the coherence time and/or based on the information related to the coherence distance.

6. The apparatus (10) of claim 2, wherein the input (16) is configured to obtain the raw information related to the position from a movement detection module (18).

7. The apparatus (10) of claim 6 further comprising the movement detection module (18) being coupled to the input (16) and/or a storage module (19).

8. An apparatus (20) for a second base station transceiver (200) in a mobile communication system (300) further comprising a first base station transceiver (100), the apparatus (20) comprising
a transceiver module (22) to wirelessly communicate with the first base station transceiver (100); and
a control module (24) configured to obtain information related to a position of an antenna (110) of the first base station transceiver (100) via the transceiver module (22) and to control the communication of the transceiver module (22) with the antenna (110) of the first base station transceiver (100) based on the information related to the position.

9. The apparatus (20) of claim 8, wherein the transceiver module (22) is further configured to obtain channel state information from the first base station transceiver (100) and wherein the control module (24) is further configured to control the transceiver module (22) based on the channel state information.

10. The apparatus (20) of claim 9,
wherein the control module (24) is configured to predict the channel state information based on the information related to the position, and/or wherein the control module (24) is configured to determine information related to a predicted position of the antenna based on the information related to the position and wherein the control module (24) is configured to predict the channel state information based on the information related to the predicted position,
and/or wherein the control module (24) is configured to obtain the information related to the position on a first more frequent time-basis, and wherein the control module (24) is configured to obtain the channel state information on a second less frequent time basis.

11. The apparatus (20) of claim 8, wherein the control module (24) is further configured to obtain at least one element of the group of information related to a coherence time and information related to a coherence distance via the transceiver module (22) as part of the information related to the position, and wherein the control module (24) is further configured to control the communication of the transceiver module (22) based on the information related to the coherence time and/or the information related to the coherence distance.

12. The apparatus (20) of claim 8 further comprising a storage module (26), wherein the control module (24) is configured to store the information related to the position and the channel state information using the storage module (26), and wherein the control module (24) is configured to determine an estimated channel state based on the stored information related to the position and channel state information, and wherein the control module (24) is configured to control the transceiver module (22) based on the estimated channel state.

13. A method suitable for a first base station transceiver (100) in a mobile communication system (300), the mobile communication system (300) further comprising a second base station transceiver (200), the first base station transceiver (100) further comprising an antenna (110) being flexibly moveable around a mounting device for the antenna (110), the method comprising
wirelessly communicating (32) with the second base station transceiver (200) via the antenna (110);
determining (34) information related to a position of the antenna (110), and
providing (36) the information related to the position of the antenna (110) to the second base station transceiver (200).

14. A method suitable for a second base station transceiver (200) in a mobile communication system (300) further comprising a first base station transceiver (100), the method comprising
wirelessly communicating (42) with the first base station transceiver (100),
obtaining (44) information related to a position of an antenna (110) of the first base station transceiver (100), and
controlling (46) the wirelessly communicating (42) with the antenna (110) of the first base station transceiver (100) based on the information related to the position.

15. A computer program product comprising a computer readable medium having computer readable program code embodied therein, the computer readable program code being configured to implement any of the methods of claim 13 and 14, when being loaded on a computer, a processor, or a programmable hardware component.

## Amended claims

### Amended claims in accordance with Rule 137(2) EPC.

1. An apparatus (10) for a first base station transceiver (100) in a mobile communication system (300), the mobile communication system (300) further comprising a second base station transceiver (200), the first base station transceiver (100) further comprising an antenna (110) being flexibly moveable around a mounting device for the antenna (110), the apparatus (10) comprising
a transceiver module (12) to wirelessly communicate with the second base station transceiver (200) via the antenna (110);
a control module (14) configured to:
determine information related to a position of the antenna (110),
provide the information related to the position of the antenna (110) via the transceiver module (12) to the second base station transceiver (200),
determine channel state information on a radio channel between the second base station transceiver (200) and the antenna (110) via the transceiver module (12), and
provide the channel state information via the transceiver module (12) to the second base station transceiver (200).

2. The apparatus (10) of claim 1 further comprising an input (16), wherein the control module (14) is further configured to obtain raw information related to the position of the antenna (110) via the input (16), and to determine the information related to the position based on the raw information related to the position.

3. The apparatus (10) of claim 1,
wherein the first base station transceiver (100) corresponds to a small cell base station transceiver and/or a remote radio head
and/or wherein the second base station transceiver (200) corresponds to a macro cell base station transceiver
and/or wherein the information related to the position comprises at least one element of the group of information related to an absolute position of the antenna (110), information related to a relative position of the antenna (110), information related to a direction of the antenna (110), information related to a velocity of the antenna (110), information related to an acceleration of the antenna (110), information related to an oscillation of the antenna (110), information related to one or more oscillation periods of the antenna (110), information related to one or more oscillation amplitudes of the antenna (110), information related to statistical properties of a movement of the antenna (110), and information related to a zero-crossing of the antenna (110),
and/or wherein the control module (14) is configured to control the transceiver module (12) based on the information related to the position.

4. The apparatus (10) of claim 1,
wherein the control module is configured to determine information related to one or more favorable positions, based on the channel state information and the information related to the position, and wherein the control module (14) is configured to provide the channel state information and/or the information related to the position based on the information related to the one or more favorable positions,
and/or wherein the control module (14) is configured to provide the information related to the position on a first more frequent time-basis, and wherein the control module (14) is configured to provide the channel state information on a second less frequent time basis,
and/or wherein the control module (14) is further configured to determine at least one element of the group of information related to a coherence time and information related to a coherence distance based on a statistical analysis of the channel state information and the information related to the position, and wherein the control module (14) is further configured to provide the information related to the position and/or the channel state information based on the information related to the coherence time and/or based on the information related to the coherence distance.

5. The apparatus (10) of claim 2, wherein the input (16) is configured to obtain the raw information related to the position from a movement detection module (18).

6. The apparatus (10) of claim 5 further comprising the movement detection module (18) being coupled to the input (16) and/or a storage module (19).

7. An apparatus (20) for a second base station transceiver (200) in a mobile communication system (300) further comprising a first base station transceiver (100), the apparatus (20) comprising
a transceiver module (22) to wirelessly communicate with the first base station transceiver (100); and
a control module (24) configured to obtain information related to a position of an antenna (110) of the first base station transceiver (100) via the transceiver module (22) and to control the communication of the transceiver module (22) with the antenna (110) of the first base station transceiver (100) based on the information related to the position.

8. The apparatus (20) of claim 7, wherein the transceiver module (22) is further configured to obtain channel state information from the first base station transceiver (100) and wherein the control module (24) is further configured to control the transceiver module (22) based on the channel state information.

9. The apparatus (20) of claim 8,
wherein the control module (24) is configured to predict the channel state information based on the information related to the position, and/or wherein the control module (24) is configured to determine information related to a predicted position of the antenna based on the information related to the position and wherein the control module (24) is configured to predict the channel state information based on the information related to the predicted position,
and/or wherein the control module (24) is configured to obtain the information related to the position on a first more frequent time-basis, and wherein the control module (24) is configured to obtain the channel state information on a second less frequent time basis.

10. The apparatus (20) of claim 7, wherein the control module (24) is further configured to obtain at least one element of the group of information related to a coherence time and information related to a coherence distance via the transceiver module (22) as part of the information related to the position, and wherein the control module (24) is further configured to control the communication of the transceiver module (22) based on the information related to the coherence time and/or the information related to the coherence distance.

11. The apparatus (20) of claim 7 further comprising a storage module (26), wherein the control module (24) is configured to store the information related to the position and the channel state information using the storage module (26), and wherein the control module (24) is configured to determine an estimated channel state based on the stored information related to the position and channel state information, and wherein the control module (24) is configured to control the transceiver module (22) based on the estimated channel state.

12. A method suitable for a first base station transceiver (100) in a mobile communication system (300), the mobile communication system (300) further comprising a second base station transceiver (200), the first base station transceiver (100) further comprising an antenna (110) being flexibly moveable around a mounting device for the antenna (110), the method comprising
wirelessly communicating (32) with the second base station transceiver (200) via the antenna (110);
determining (34) information related to a position of the antenna (110),
providing (36) the information related to the position of the antenna (110) to the second base station transceiver (200),
determining (38) channel state information on a radio channel between the second base station transceiver (200) and the antenna (110), and
providing (39) the channel state information to the second base station transceiver (200).

13. A method suitable for a second base station transceiver (200) in a mobile communication system (300) further comprising a first base station transceiver (100), the method comprising
wirelessly communicating (42) with the first base station transceiver (100),
obtaining (44) information related to a position of an antenna (110) of the first base station transceiver (100), and
controlling (46) the wirelessly communicating (42) with the antenna (110) of the first base station transceiver (100) based on the information related to the position.

14. A computer program product comprising a computer readable medium having computer readable program code embodied therein, the computer readable program code being configured to implement any of the methods of claim 12 and 13, when being loaded on a computer, a processor, or a programmable hardware component.
